# EUROPEAN PATENT APPLICATION

(11) **EP 3 835 894 A1**
(43) Date of publication of application: **16.06.2021**
(21) Application number: 19214433.5
(22) Date of filing: 09.12.2019
(51) Int. Cl.: G05B 13/02, G05B 13/04, G06N 20/00

(54) **METHOD AND APPARATUS FOR CONFIGURING A MACHINE CONTROLLER**

(71) Applicant: Siemens Aktiengesellschaft, 80333 München (DE)
(72) Inventor: Geipel, Markus Michael, 80799 München (DE); Hein, Daniel, 81549 München (DE); Mas, Peter, 69680 Chassieu (FR); Weber, Marc Christian, 80339 München (DE)

(57) **Abstract**

For configuring a machine controller (CTL), the following steps are performed:
a) a simulator (SIM) is interfaced for receiving machine control signals (CD), for simulating a physical reaction of the machine (MA), and for transmitting simulated measurement data (SSD) resulting from that reaction;
b) for the machine controller (CTL) a plurality of different controller settings (CP1..., CPN) is generated;
c) for a respective controller setting (CP1..., CPN):
- an instance (CI1..., CIN) of the machine controller is generated,
- the controller instance (CI1..., CIN) receives simulated measurement data (SSD) from the simulator (SIM), generates machine control signals (CD) depending on the simulated measurement data (SSD), and transmits the machine control signals (CD) to the simulator (SIM), and
- a performance value (PV) is determined from the simulated measurement data (SSD);

d) the performance values (PV) are compared, and an updated plurality of controller settings (CP1..., CPN) biased towards improved machine performance is determined;
e) steps c) and d) are iterated with the updated plurality of controller settings (CP1..., CPN) while applying a reinforcement learning method to determine a controller setting (CPO) optimized with respect to the performance values (PV); and
g) the machine controller (CTL) is configured with the optimized controller setting (CPO).

## Description

Complex machines like production plants, robots, power plants, gas turbines, wind turbines, combustion engines, vehicles, or power grids usually require sophisticated control strategies in order to operate the machine in a productive and stable operating range. Such control strategies, which are often denoted as control policies, are usually implemented in specific machine controllers.

Contemporary machine controllers are often designed with help of a numerical simulation model of properties and dynamic behavior of a respective machine. Such simulation models are often denoted as plant models. With a simulation model at hand, different control policies for a machine controller can be applied and compared in simulation in order to identify or derive a control policy leading to better machine performance. In this way one may design control policies which make a combustion process of a combustion engine more efficient or save time and energy in a production plant.

However, up to now it often requires large manual effort and several iterations to derive an appropriate control policy for a given simulated environment.

It is an object of the present invention to provide a method and an apparatus for configuring a machine controller that involve less effort.

This object is achieved by a method according to patent claim 1, an apparatus according to patent claim 13, a computer program product according to patent claim 14, and a computer readable storage medium according to patent claim 15.

For configuring a machine controller to control a machine, in particular a production plant, a robot, a power plant, a gas turbine, a wind turbine, a combustion engine, a vehicle, a heating system, an air-condition, a 3D printer, or a power grid, the following steps are performed:
a) a simulator is interfaced for receiving machine control signals, for simulating a physical reaction of the machine to the machine control signals, and for transmitting simulated measurement data resulting from that reaction;
b) for the machine controller a plurality of different controller settings is generated;
c) for a respective controller setting:
   - an instance of the machine controller is generated configured with the respective controller setting,
   - the controller instance receives simulated measurement data from the simulator, generates machine control signals depending on the simulated measurement data, and transmits the machine control signals to the simulator, and
   - a performance value is determined quantifying a machine performance from the simulated measurement data;
d) the performance values are compared, and an updated plurality of controller settings biased towards improved machine performance is determined;
e) steps c) and d) are iterated with the updated plurality of controller settings while applying a reinforcement learning method to determine a controller setting optimized with respect to the performance values; and
g) the machine controller is configured with the optimized controller setting.

For performing the inventive method, an apparatus, a computer program product, and a non-transient computer readable storage medium are provided.

The inventive method and/or the inventive apparatus may be implemented by means of one or more processors, computers, application specific integrated circuits (ASIC), digital signal processors (DSP), and/or field-programmable gate arrays (FPGA) .

Advantageously, the invention can be used to automatically and efficiently derive optimized controller settings or control policies for a given simulator and/or a given performance target, thus saving manual design effort and speeding up a design process for the machine, for its controller, and/or for its simulator. In particular, the invention may be used as an inherent component of such a design process and can be easily integrated in existing workflows.

As the reinforcement learning method is in general agnostic of a specific simulator or machine, the invention may be used to configure controllers for quite different machines and different types of machines. Actually, the invention may implement some kind of universal approximator, which allows nearly arbitrary mappings of measurement data to control signals. Moreover, novel control policies or controller designs may be revealed due to a systematical exploration of a controller design space.

Particular aspects of the invention are specified by the dependent claims.

According to a preferred embodiment of the invention, the reinforcement learning method may apply a gradient-free optimization method for optimizing the controller settings. It turns out that many gradient-based optimization methods show poor convergence in high-dimensional deep reinforcement learning networks. Hence, avoiding to rely on gradient information often improves convergence and stability considerably.

In particular, the optimization method may comprise a particle swarm method, a genetic algorithm, a population-based method, a simulated annealing method, a backpropagation method and/or a Monte Carlo method. Preferably, the preceding methods may be executed in parallel, thus saving computation time.

More particularly, the reinforcement learning method may apply an artificial neural network, a recurrent neural network, a convolutional neural network, an autoencoder, a deep learning architecture, a support vector machine, a data driven trainable regression model, a k-nearest neighbor classifier, a physical model and/or a decision tree.

According to a further embodiment of the invention, states and/or actions of the simulated machine may be explored by executing the following steps for the respective controller setting:
- the respective controller instance may generate trial control signals according to the respective controller setting and may transmit them to the simulator,
- from the simulator, simulated measurement data may be received resulting from applying the trial control signals,
- a trial performance value may be determined, and b) the trial performance values may be used for updating the plurality of controller settings.

The generation of the trial control signals may be at least partially random based. Alternatively or additionally, the underlying controller settings may be generated or modified in a random-based manner. With help of the trial control signals a dynamic of the simulator or of the simulated machine can be initially explored in order to get first information about interrelationships between control signals and physical reactions of the simulated machine. The trial control signals may be triggered when a simulator is newly connected or newly configured. The above exploration technique often allows to interface simulators as black box modules with almost no prior knowledge about the dynamics of the underlying machine. Furthermore, that exploration technique may be seamlessly integrated in existing implementations.

According to a preferred embodiment of the invention, the respective simulated measurement data may be preprocessed by an autoencoder and/or by a convolutional neural network of the respective controller instance. The autoencoder and/or the convolutional neural network can be used to reduce the input space for the control policy or the reinforcement learning method. With that, the original measurement data may be narrowed down to particular relevant features. Such kind of reducing an input space is often denoted as feature selection. The autoencoder and/or the convolutional neural network may be trained together with the other controller settings of the respective controller instance.

According to a further embodiment of the invention, the machine control signals and the simulated measurement data may be transmitted to a machine learning module. The machine learning module may be trained to reproduce the simulated measurement data from the machine control signals. With that, the simulator may be at least partially replaced by the trained machine learning module for determining a physical reaction of the machine to machine control signals. In many cases the trained machine learning module can provide a surrogate model for an approximative machine simulation, which is faster executable than the simulator. In particular, a computational simulation effort may be measured, and the training of the machine learning module or the generation of the surrogate model can be triggered depending on the measured computational effort. Alternatively or additionally, simulations for several or all controller settings can be first performed by the trained machine learning module, and only some better performing controller settings may be simulated in detail by the simulator.

According to a further advantageous embodiment of the invention, the controller instances and/or instances of the simulator may be delegated to different processors and executed in parallel. This often greatly reduces a computation time. In particular, the computations may be delegated to one or more graphic cards, which usually provide a highly parallel computing architecture.

According to a further embodiment of the invention, test case data and predetermined performance data may be received, and the simulator may be configured according to the test case data. A performance value resulting from applying the optimized controller setting may be determined and compared with the predetermined performance data. Depending on the comparison the optimized controller setting may be enabled, verified and/or activated. In particular, the enabling of the optimized controller setting may be used to trigger the configuration of the machine controller with that optimized controller setting. In this way the predetermined performance data can be used to specify a performance target, and it can be verified that the optimized controller setting fulfills the performance target in an application scenario specified by the test case data.

Furthermore, a performance value resulting from applying the optimized controller setting may be determined, and an evaluation report comprising that performance value and that optimized controller setting may be generated and output.

Particular embodiments of the invention are described in the following paragraphs with reference to the figures. The figures illustrate in schematic representation:
- Figure 1: a machine controlled by a machine controller configured with a specific controller setting, and
- Figure 2: an inventive apparatus for configuring the machine controller.

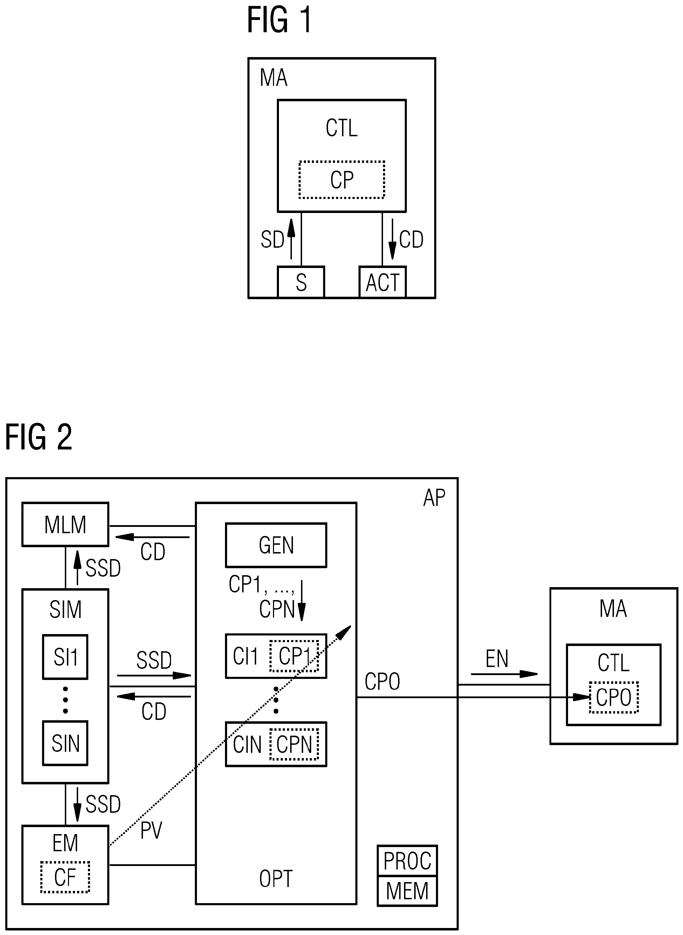

Figure 1 illustrates, in schematic representation, a machine MA controlled by a machine controller CTL. The latter is configured with a specific controller setting CP implementing a specific control policy. The machine MA may be or may comprise a robot, a production plant, a power plant, a gas turbine, a wind turbine, a combustion engine, a vehicle, a heating system, an air-condition, a 3D printer, a power grid and/or a turing machine.

The machine MA has one or more sensors S, which measure operational quantities of the machine MA or of its environment and provide these quantities as measurement data SD to the machine controller CTL. The measurement data SD my comprise physical data, e.g. relating to distance, time, velocity, acceleration, force, power, torque, angle, deflection, temperature, pressure, entropy, or voltage, chemical data, control data, action data, performance data, status data, condition data, environment data, forecast data, or other data specifying a status or a property of the machine MA or of its environment. In particular, the sensors may comprise optical sensors, acoustical sensors, or contact sensors.

The measurement data SD are evaluated by the machine controller CTL according to its controller setting CP. Depending on the measurement data SD and according to the controller setting CP the machine controller CTL particularly decides upon an appropriate action to be taken by the machine MA and generates appropriate machine control signals CD, e.g. control data, in order to induce the machine MA to perform that action. In fact, the control policy or the controller setting CP determines a specific mapping of measurement data SD to machine control signals CD.

The machine control signals CD are transmitted from the machine controller CTL to one or more actuators ACT of the machine MA. The actuators ACT are intended to perform actions of the machine MA and may comprise e.g. a robot arm, an effector, a conveyor belt, a heater, a compressor, a motor, a welding tool or a milling tool.

Figure 2 illustrates, in schematic representation, an inventive apparatus AP for configuring the machine controller CTL to control a machine MA. Reference signs in figure 2 which are identical to those in figure 1 denote the same entities, which are preferably embodied as described above. The apparatus AP comprises one or more processors PROC for executing method steps of the inventive method, and a memory MEM for storing processing data. The memory MEM also comprises non-transient memory for storing a program implementing the inventive method.

In order to simulate properties and a dynamic behavior of the machine MA the apparatus AP loads and interfaces a simulator SIM implementing a numerical physical simulation model of the machine MA. Such simulation models are often denoted as plant models. The simulator SIM is configured to receive machine control signals CD from a machine controller, to simulate a physical reaction of the machine MA to the machine control signals CD, and to produce simulated measurement data SSD resulting from that reaction. The simulator SIM is particularly arranged to produce simulated measurement data SSD which are as close as possible to the measurement data SD the physical machine MA would produce in the same situation.

Within the simulator SIM such a machine controller is preferably modeled as a functional component with the simulated measurement data SSD as input and the machine control signals CD as output. A particular functionality or content of the machine controller is left as a black box from the simulator's point of view. From the machine controller's point of view, on the other hand, the simulator SIM is preferably driven as a black box too. In this way, the simulator SIM as well as the machine controller are easily combinable and exchangeable without much interfacing effort or manual adjustments.

The apparatus AP further comprises an optimization module OPT, which is coupled to the simulator SIM. The optimization module OPT is based on machine learning and implements a model-based reinforcement learning method for training one or more artificial neural networks and/or other trainable models in order to optimize one or more controller settings for the machine controller CTL. In particular, the controller settings may be represented by weights of an artificial neural network. In this case the optimization module OPT optimizes the neural weights by reinforcement learning, and an artificial neural network of the machine controller CTL can be configured with the optimized neural weights as optimized controller settings.

The apparatus AP further comprises an evaluation module EM for determining a performance of the simulated machine MA. The evaluation module EM is coupled to the simulator SIM and to the optimization module OPT.

Furthermore, the apparatus AP comprises a machine learning module MLM, for accelerating the simulation of the machine MA. The machine learning module MLM preferably comprises a further artificial neural network and is coupled to the simulator SIM and to the optimization module OPT.

In order to adapt the apparatus AP to different controller types, a controller class identification may be input. Such a controller class may refer to different types of controllers like PID controllers (PID: proportional-integral-derivative controller), fuzzy controllers, artificial neural networks, or controllers based on algebraic formulas. Depending on the received controller class identification the apparatus AP may select and/or apply an appropriate machine controller, simulator, reinforcement learning method, and/or optimization module.

The optimization module OPT comprises a settings generator GEN for generating a variety of different controller settings CP1..., CPN for the machine controller CTL. Each of the controller settings CP1..., CPN implements a specific control policy, which defines a specific mapping of measurement data to machine control signals. According to the invention, the controller settings are to be compared and optimized with regard to a performance of the simulated machine MA.

For this purpose, the optimization module OPT generates for each of the controller settings CP1..., CPN a controller-setting-specific instance CI1..., or CIN, respectively, of the machine controller CTL and a corresponding instance SI1..., or SIN, respectively, of the simulator SIM. The respective controller instance CI1..., or CIN is configured with the respective controller setting CP1..., or CPN. Furthermore, the respective controller instance CI1..., or CIN is allocated and specifically connected to the corresponding simulator instance SI1..., or SIN by establishing input and output channels between the respective simulator instance SI1..., or SIN and the respective controller instance CI1..., or CIN. The controller instances CI1..., CIN and/or the simulator instances SI1..., SIN may be implemented by data records, object methods, subroutines, or other objects, e.g. in the sense of object-oriented programming.

Preferably, the controller instances CI1..., CIN and/or the simulator instances SI1..., SIN are delegated to different processors or different processor cores and executed at least partially in parallel. For this purpose, one or more graphic cards may be used, which usually provide a highly parallel computing architecture.

In order to train the controller instances CI1..., CIN by the reinforcement learning method the following steps are carried out for each of the controller instances CI1..., CIN and thus for each of the controller settings CP1..., CPN:
The respective controller instance CI1..., or CIN receives simulated measurement data SSD from the respective simulator instance SI1..., or SIN. Depending on the simulated measurement data SSD the respective controller instance CI1..., or CIN generates machine control signals CD according to the respective controller setting CP1..., or CPN. Preferably, the respective controller instance CI1..., or CIN comprises an autoencoder and/or a convolutional neural network for preprocessing the simulated measurement data SSD. In this way, the input features for the respective controller instance CI1..., or CIN can be narrowed down thus facilitating the processing of the simulated measurement data SSD and simplifying the optimization problem.

The generated machine control signals CD are transmitted from the respective controller instance CI1..., or CIN to the respective simulator instance SI1..., or SIN. The latter simulates a physical reaction of the machine MA to the transmitted control signals CD and transmits newly simulated measurement data SSD back to the respective controller instance CI1..., or CIN.

The above steps are repeated for several simulated time steps over a predetermined time interval. During that time interval the simulated measurement data SSD of the different time steps are sampled and transmitted to the evaluation module EM. The evaluation module EM evaluates the sampled simulated measurement data SSD and determines from them a performance value PV quantifying a machine performance of the machine MA, e.g. a throughput, a velocity, a resource consumption, a cycle time, a product quality, a precision, wear and/or a weighted combination of such quantities.

The performance value PV is preferably determined by means of a so-called cost function CF, often also denoted as reward function. Such a cost function allows to calculate rewards or costs, in particular cumulative and/or discounted rewards or costs of performing in a specific way. Such rewards or costs are often also denoted as return. On a low level, a cost function r(s,a,s') may compute a measure of how useful a transition from a state s to a state s' driven by an action a is. In the present embodiment, the cost function CF also quantifies violations of one or more constraints which apply to the machine MA.

In that way, a controller-setting-specific performance value PV is determined for each of the controller settings CP1..., CPN.

The resulting performance values PV are transmitted from the evaluation module EM to the optimization module OPT in order to optimize the set of controller settings CP1..., CPN with respect to the performance values PV. For this purpose, the performance values PV for the different controller settings CP1..., CPN are compared and an updated set of controller settings biased towards improved machine performance is determined. This can be done e.g. by selecting, combining, and/or weighting one or more better performing controller settings and by generating modifications of them until a complete set of N updated controller settings is available. The generation or modification of the controller settings is driven by the reinforcement learning method of the optimization module OPT. For comparing the performance values PV, for updating the controller settings CP1..., CPN, and/or for applying the reinforcement learning method, the controller instances CI1..., CIN may communicate mutually or via a coordination device. For the sake of simplicity, the updated controller settings are also denoted by CP1..., CPN in the following.

With the updated set of controller settings CP1..., CPN the above procedure is iterated several times in a closed loop. In doing so, the consecutive updates of the controller settings CP1..., CPN are driven by the reinforcement learning method in such a way that the performance values PV are at least approximately optimized. According to the present embodiment, the reinforcement learning method applies a gradient-free optimization method, preferably a particle swarm method and/or a Monte Carlo method for the optimization. As already mentioned above, such a gradient-free optimization method shows significantly better convergence, particularly in deep learning environments.

When a controller setting is found which optimizes the performance values PV at least approximately, that controller setting is output by the optimization module OPT as optimized controller setting CPO.

Advantageously, the above optimization procedure is started with an initial exploration phase. In this exploration phase a behavior of the simulator SIM or the simulated machine MA in reaction to trial control signals is initially explored. For generating the trial control signals the settings generator GEN generates initial controller settings and configures the controller instances CI1..., CIN with the initial controller settings. The trial control signals are then generated according to the initial controller settings by the controller instances CI1..., CIN. The initial controller settings and/or the generation of the trial control signals may be at least partially random based. The trial control signals are transmitted to the simulator instances SI1..., SIN. The latter simulate a reaction of the machine MA to the trial control signals and transmit simulated measurement data resulting from applying the trial control signals. From the simulated measurement data, the evaluation module EM determines trial performance values quantifying a performance of the simulated machine MA. The trial performance values are then used for updating the initial controller settings. The exploration phase may be started whenever a new or modified simulator SIM is loaded or interfaced by the apparatus AP.

According to the present embodiment, the machine learning module MLM is used to generally accelerate the simulation of the machine MA. For this purpose, the machine learning module MLM receives the machine control signals CD from the optimization module OPT and the corresponding simulated measurement data SSD from the simulator SIM. With that, the machine learning module MLM is trained to reproduce the simulated measurement data SSD from the machine control signals CD. When the training of the machine learning module MLM is finished, e.g. when a discrepancy between the simulated measurement data SSD from the simulator SIM and the corresponding data produced by the machine learning module MLM falls below a given threshold, the simulator may be replaced by the machine learning module MLM for simulating the machine MA. In many cases an execution of a neural model needs much less computational effort than a detailed physical simulation.

Before the machine controller CTL is actually configured with the optimized controller setting CPO, the latter is preferably verified against one or more predetermined test cases. For this purpose, test case data are received together with predetermined performance data specifying a performance target for a respective test case. The test case data are used to configure the simulator SIM and/or the optimization module OPT. After that, one or more performance values resulting from applying the optimized controller setting CPO are determined as described above. If this performance values satisfy the performance targets, the optimized controller setting CPO is enabled.

Once the optimized controller setting CPO is enabled it is transferred to the machine controller CTL, and the latter is configured with the optimized controller setting CPO. Alternatively or additionally, an enabling signal EN is generated by the apparatus AP when the optimized controller setting CPO is enabled. The enabling signal EN is then transmitted to the machine controller CTL and enables or activates its configuration with the optimized controller setting CPO.

After configuring the machine controller CTL with the enabled optimized controller setting CPO it can be used for controlling the machine MA.

The invention allows to automatically configure machine controllers with optimized controller settings or optimized control policies for given simulators, thus considerably speeding up a design process and reducing a risk of creating inexpedient configurations. As the inventive approach is generally agnostic of the specific simulator it can be applied to a wide variety of machines. In many cases it essentially suffices to provide a simulator, a cost function, and optionally a controller class to derive an optimized controller setting.

## Claims

1. A computer implemented method for configuring a machine controller (CTL) to control a machine (MA), the method comprising:
a) interfacing a simulator (SIM) for receiving machine control signals (CD), simulating a physical reaction of the machine (MA) to the machine control signals (CD), and transmitting simulated measurement data (SSD) resulting from that reaction,
b) generating a plurality of different controller settings (CP1..., CPN) for the machine controller (CTL),
c) for a respective controller setting (CP1..., CPN):
- generating an instance (CI1..., CIN) of the machine controller configured with the respective controller setting (CP1..., CPN),
- the controller instance (CI1..., CIN) receiving simulated measurement data (SSD) from the simulator (SIM), generating machine control signals (CD) depending on the simulated measurement data (SSD), and transmitting the machine control signals (CD) to the simulator (SIM),
- determining a performance value (PV) quantifying a machine performance from the simulated measurement data (SSD),
d) comparing the performance values (PV) and determining an updated plurality of controller settings (CP1..., CPN) biased towards improved machine performance,
e) iterating the steps c) and d) with the updated plurality of controller settings (CP1..., CPN) while applying a reinforcement learning method to determine a controller setting (CPO) optimized with respect to the performance values, and
g) configuring the machine controller (CTL) with the optimized controller setting (CPO).

2. Method according to claim 1, wherein
the reinforcement learning method applies a gradient-free optimization method for optimizing the controller settings (CP1..., CPN).

3. Method according to claim 2, wherein
the optimization method comprises a genetic algorithm, a population-based method, a particle swarm method, a simulated annealing method, a backpropagation method and/or a Monte Carlo method.

4. Method according to one of the preceding claims, wherein
a) states and/or actions of the simulated machine are explored by executing the following steps for the respective controller setting (CP1..., CPN):
- generating trial control signals by the respective controller instance (CI1..., CIN) according to the respective controller setting (CP1..., CPN) and transmitting them to the simulator (SIM),
- receiving, from the simulator (SIM), simulated measurement data (SSD) resulting from applying the trial control signals,
- determining a trial performance value, and
b) using the trial performance values for updating the plurality of controller settings (CP1..., CPN).

5. Method according to one of the preceding claims, wherein the respective simulated measurement data (SSD) are preprocessed by an autoencoder and/or by a convolutional neural network of the respective controller instance (CI1..., CIN).

6. Method according to one of the preceding claims, wherein the machine control signals (CD) and the simulated measurement data (SSD) are transmitted to a machine learning module (MLM),
the machine learning module (MLM) is trained to reproduce the simulated measurement data (SSD) from the machine control signals (CD), and
the simulator (SIM) is at least partially replaced by the trained machine learning module (MLM) for determining a physical reaction of the machine (MA) to machine control signals (CD) .

7. Method according to one of the preceding claims, further comprising:
generating, for the respective controller setting (CP1..., CPN), an instance (SI1..., SIN) of the simulator and specifically connecting the simulator instance (SI1..., SIN) to the respective controller instance (CI1..., CIN).

8. Method according to one of the preceding claims, further comprising:
delegating the controller instances (CI1..., CIN) and/or instances (SI1..., SIN) of the simulator to different processors and executing the delegated instances in parallel.

9. Method according to one of the preceding claims, further comprising:
receiving test case data and predetermined performance data,
configuring the simulator (SIM) according to the test case data,
determining a performance value (PV) resulting from applying the optimized controller setting (CPO),
comparing that performance value (PV) with the predetermined performance data, and
enabling the optimized controller setting (CPO) depending on the comparison.

10. Method according to one of the preceding claims, further comprising:
determining a performance value (PV) resulting from applying the optimized controller setting (CPO), and
generating and outputting an evaluation report comprising that performance value (PV) and that optimized controller setting (CPO).

11. Method according to one of the preceding claims, wherein the machine (MA) to be controlled comprises a production plant, a robot, a power plant, a gas turbine, a wind turbine, a combustion engine, a vehicle, a heating system, an air-condition, a 3D printer, and/or a power grid.

12. Method according to one of the preceding claims, wherein the reinforcement learning method applies an artificial neural network, a recurrent neural network, a convolutional neural network, an autoencoder, a deep learning architecture, a support vector machine, a data driven trainable regression model, a k-nearest neighbor classifier, a physical model and/or a decision tree.

13. An apparatus (AP) for configuring a machine controller (CTL) to control a machine (MA), the apparatus (AP) being adapted to perform a method according to one of the preceding claims.

14. A computer program product for configuring a machine controller (CTL) to control a machine (MA), the computer program product being adapted to perform a method according to one of the claims 1 to 12.

15. A non-transient computer readable storage medium storing a computer program product according to claim 14.
